# EUROPEAN PATENT APPLICATION

(11) **EP 1 441 143 A1**
(43) Date of publication of application: **28.07.2004**
(21) Application number: 04000845.0
(22) Date of filing: 16.01.2004
(51) Int. Cl.: F16D 69/02, C01G 23/00, C04B 35/622

(54) **Friction material including titanium dioxide particles**

(30) Priority: 16.01.2003 US 345713
(71) Applicant: Akebono Corporation, Farmington Hills, Michigan 48331 (US)
(72) Inventor: Xinming, Shao, Rochester Hills, Michigan 48309 (US); Baba, Tsukasa, 5-4-71 Higashi, Hanyu Saitama 348-8511 (JP); Hajime, Hayashi, Novi,Michigan 48335 (US)
(74) Representative: Müller, Thomas Michael, Dipl.-Ing.

(57) **Abstract**

A friction material having a filler that includes titanium dioxide particles having a diameter that is less than about fifteen micrometers. The friction material has a relatively uniform coefficient of friction and causes relatively less wear of braking components.

## Description

The present invention relates to a friction material, and more particularly relates to a filler in the friction material for particular use in an industrial machine, a railway vehicle, a baggage car, a passenger car, a freight truck, or the like wherein a brake pad, a brake lining, a clutch facing, or the like, is used in the above-mentioned applications

Automotive brake systems must satisfy a certain set of consumer expectations, such as comfort, durability, and reasonable cost. These expectations are translated into a set of specific requirements for the brake system such as a high and stable friction coefficient, vibration and noise characteristics within a predetermined limit, and low wear rates for the friction material and rotor mating surfaces. All of the aforesaid requirements have to be achieved simultaneously at a reasonable cost. Particularly, the performance has to be stable under varying application conditions, over extremes in temperature, humidity, speed, and deceleration rate for occasional or many consecutive stops.

Friction materials serve in a variety of ways to control the acceleration and deceleration of vehicles and machines. The friction materials may be resin- or rubber-bound composites based on asbestos, metallic fibers, or a combination of other fibers. The friction material is generally composed of binders, reinforcements, and fillers.

Brake linings and clutch facings consist of friction materials, which are employed to convert the kinetic energy of the moving vehicle or machine part into heat to thereby remove the kinetic energy' and halt the movement of the vehicle or machine part. Typically, the friction material absorbs the heat and gradually dissipates it into the atmosphere. The friction material is considered to be the expendable portion of the brake couple which, over a long period of use, is converted to wear debris and gases.

Fillers are frequently employed in friction materials for enhancing a predetermined characteristic such as enhancing the strength of the friction material, providing varying degrees of wear resistance, heat dissipation, temperature stabilization, or high temperature friction performance.

Fillers are also used to provide an abrasive attribute to the friction material. The magnitude of abrasiveness of the filler dictates many performance and wear characteristics of the braking system. To that end, extreme abrasiveness may lead to excellent performance but contribute to excessive wear of braking components. Insufficient abrasiveness may protect the braking components but provide relatively poor braking characteristics.

In one preferred form, the present invention provides a braking element comprising a friction material, which is comprised of a reinforcement material, binder, and filler.

The filler is comprised of, among other things, titanium dioxide particles. The titanium dioxide particles have a diameter that is less than about fifteen micrometers. The titanium dioxide particles are mixed in the friction material in a range of two percent by volume (2 v %) to twenty percent by volume (20 v %). The pigment grade quality particles reinforce the friction material and are subject to a surface treatment of a silane coupling agent or a phenolic resin.

Further areas of applicability of the present invention will become apparent from the drawings and detailed description provided hereinafter. It should be understood that the detailed description and specific examples, while indicating the preferred embodiment of the invention, are intended for purposes of illustration and example only and are not intended to limit the scope of the invention.

The present invention will become more fully understood from the detailed description and the accompanying drawings, wherein:

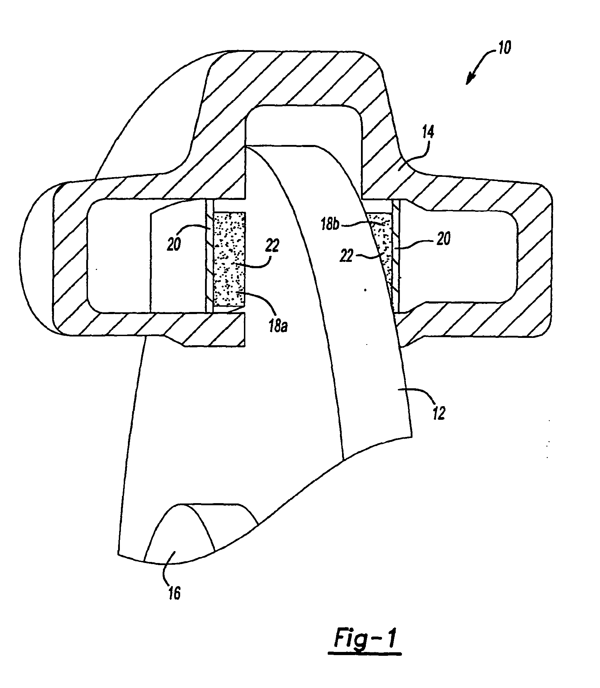

Figure 1 is a cross-sectional view of a disc brake system.

In Figure 1, a preferred embodiment of the present invention is shown with reference to a simplified and exemplary vehicle disc brake system 10. The disc brake system 10 includes a rotor 12, a caliper 14, and a hub 16. The disc brake system 10 also includes a pair of outboard and inboard brake elements 18a and 18b, respectively, referred to hereinafter as brake elements 18. The brake elements 18 are mounted to the caliper 14 using conventional methods well known to one of ordinary skill in the art. One of ordinary skill in the art will also readily appreciate the brake system 10 is shown in an simplified fashion; as such, a more detailed explanation of an exemplary disc brake system is shown in commonly assigned United States Patent Number 4,351,421, which is hereby incorporated by reference in its entirety as if fully set forth herein.

The brake elements 18 include a structural backing 20 and a friction material 22. The friction material 22 is mounted to the structural backing 20 in a conventional way, well-known to one of ordinary skill in the art. An example of one such mounting method is disclosed in commonly assigned United States Patent Number 5,073,099, which is hereby incorporated by reference in its entirety as if fully set forth herein.

The brake elements 18 squeeze against rotor 12 to cease rotation of the rotor 12 to thereby slow the vehicle (not shown) to a desired speed. As noted above, friction is produced when the brake elements 18 come into contact with the rotor 12; this in turn, causes the brake elements 18 to heat up and ultimately wear.

The friction material is comprised of a reinforcement, a binder, and a filler, which may be combined in a slurry form, for example, and pressed or molded into a desired shape. The filler is further comprised of titanium dioxide (TiO₂) particles. Introduction of titanium dioxide into the friction material provides many advantages, the benefits of which will be discussed further. Nevertheless, titanium dioxide provides a low cost and advantageous component to the friction material.

In the preferred embodiment, pigment grade particles of titanium dioxide are used in the filler of the friction material. Pigment grade, by definition, refers to the chemical purity of the titanium dioxide particles. As such, pigment grade is in excess of ninety percent chemical purity. In preferred embodiment of the present invention, the chemical purity is in excess of 94%.

To that end, exemplary titanium dioxide particles are commercially available and one such supplier is Millennium Inorganic Chemicals of Hunt Valley, MD, under the trade name TiONA® RCL-9. The titanium dioxide particles are commonly referred to as a rutile titanium dioxide. One of ordinary skill in art will readily appreciate that titanium dioxide of the requisite size and chemical purity can be acquired from many vendors. TiONA® RCL-9 is also considered a versatile high gloss grade titanium dioxide particle that is useable in alternative applications such as coatings, PVC pipe, and indirect food contact.

In the preferred embodiment of the present invention, the range of the average diameter of the titanium dioxide particles is preferably between about fifteen-hundredths (0.15) of a micrometer to about one (1) micrometer to provide optimal performance characteristics. The preferred average diameter of the particles is about twenty eight-hundredths of a micrometer. To maintain the desired performance characteristics of the friction material about ninety-five percent of the titanium dioxide particles should have an average diameter of less than about five micrometers. Further, the average diameter of about all of the particles should be less than fifteen microns. One skilled in the art will readily appreciate that deviation from the exact average diameters of the titanium dioxide particles will not render the invention inoperable but may only reduce performance.

Experimental results have shown that use of relatively small average diameter titanium dioxide particles rather than larger average diameter titanium dioxide particles improved friction material performance. More specifically, tests measuring rotor wear show friction materials containing titanium dioxide particles with relatively larger average particle size of around 30 to 45 micrometers and a chemical purity of about 80% performed worse as compared to the relatively smaller average diameter and more pure titanium dioxide particles of the present invention. To that end, the titanium dioxide particles of the present invention exhibited approximately 35% less rotor wear when compared to the relatively large and less pure titanium dioxide particles.

Further experimental results measuring percent distribution of friction coefficients of the present friction material showed superior performance when a friction material containing titanium dioxide was compared to a friction material without the same. Superior results of tests measuring percent distribution of friction coefficients show a tighter distribution of data at a desired friction coefficient, which generally translates to a more stable friction material. As such, the friction material containing titanium dioxide particles had a tighter percent distribution at about a 0.42 friction coefficient when compared to friction material that did not contain titanium dioxide particles.

In the preferred embodiment, the titanium dioxide particles are mixed into the friction material as a percentage of total volume, such that the range is two percent by volume (2 v %) up to twenty percent by volume (20 v %). The preferred range is five percent by volume (5 v %) up to fifteen percent by volume (15 v %), with the preferred range providing optimal performance characteristics. One skilled in the art will readily appreciate that adherence to the exact volume percentage is not required to maintain operability of the invention, but deviation from the exact volume percentages may reduce performance of the friction material.

In the preferred embodiment of the present invention, Table 1 shows an exemplary composition of the friction material where the values found in the column labeled "Preferred Example Ranges" represents preferred ranges of the components within the friction material. The values found in the column labeled "Preferred Example Values" are preferred values for the friction material according to the preferred embodiment of the present invention. One skilled and the art will really appreciate that the values outlined below in Table 1 are exemplary values and, as such, provide one example of the preferred embodiment but do not serve to limit the invention.

**Table 1.**

| The Composition of the Friction Material of the Preferred Embodiment of the Present Invention | | |
|---|---|---|
| Components of the Friction Material | Preferred Example Ranges (percentage of total volume) | Preferred Example Values (percentage of total volume) |
| Phenolic Resin | about 5 to 23 | about 14 |
| Mineral Fiber | about 2 to 12 | about 0 |
| Low Carbon Steel Fiber | about 2 to 28 | about 25 |
| Copper/Brass/Bronze Fiber | about 0 to 10 | about 0 |
| Aramid Fiber | about 0 to 8 | about 2 |
| Celluose Fiber | about 0 to 5 | about 0 |
| Barium Sulfate | about 3 to 15 | about 12 |
| Coke/Graphite | about 1 to 28 | about 30 |
| Metal Sulfides | about 0 to 12 | about 0 |
| Metal Powders | about 1 to 35 | about 0 |
| Rubber tire tread dust | about 1 to 9 | about 3 |
| Cashew Nut Shell Dust | about 2 to 20 | about 4 |
| Titanium Dioxide Particles | about 2 to 20 | about 8 |
| Other metals of metal oxides | about 0 to 10 | about 2 |

In an alternative preferred embodiment of the present invention, Table 2 shows an alternative exemplary composition of the friction material where the values found in the column labeled "Preferred Example Ranges" represents preferred ranges of the components within the friction material. The values found in the column labeled "Preferred Example Values" are preferred values for the friction material according to the preferred embodiment of the present invention. One skilled and the art will readily appreciate that the values outlined below in Table 2 are exemplary values and, as such, provide one example of an alternative preferred embodiment but do not serve to limit the invention.

**Table 2.**

| The Composition of the Friction Material of an Alternative Preferred Embodiment of the Present Invention | | |
|---|---|---|
| Components of the Friction Material | Preferred Example Ranges (percentage of total volume) | Preferred Example Values (percentage of total volume) |
| Phenolic Resin | about 9 to 25 | about 17.5 |
| Mineral Fiber | about 2 to 12 | about 5 |
| Copper Fiber | about 1 to 8 | about 4 |
| Brass Fiber | about 1 to 12 | about 2 |
| Ceramic Fiber | about 1 to 8 | about 4.5 |
| Potassium hexatitanate or octatatinate fiber | about 0 to 25 | about 18 |
| Barium Sulfate | about 2 to 2 | about 16 |
| Coke/Graphite | about 1 to 25 | about 6 |
| Metal Sulfides | about 1 to 15 | about 2 |
| Reground rubber tire tread dust | about 1 to 9 | about 3 |
| Cashew Nut Shell Friction Dust | about 2 to 18 | about 8 |
| Titanium Dioxide Particles | about 2 to 20 | about 12 |
| Other metals of metal oxides | about 0 to 10 | about 2 |

One of ordinary skill in art will readily appreciate that many vendors supply various commercially available mineral fibers suitable for use in friction materials. In the preferred embodiment of the present invention, one such exemplary mineral fiber is a Lapinus® Fiber, which is commercially available from Lapinus Fibres B.V., 6040 KD Roermond, The Netherlands, under the trade name Roxul® 1000.

One of ordinary skill in art will readily appreciate that many vendors supply various commercially available ceramic fibers suitable for use in the friction materials. In the preferred embodiment of the present invention, one such exemplary mineral fiber is a Superwool® Fiber, which is commercially available from Thermal Ceramics, P.O. Box 923, Dept. 167, Augusta, GA 30903.

One of ordinary skill in art will readily appreciate that many vendors supply various commercially available metal sulfides suitable for use in the friction materials. In the preferred embodiment of the present invention, possible exemplary metal sulfides are antimony tri-sulfide, copper sulfide, stannic sulfide, and stannous sulfide all of which are commercially available.

One of ordinary skill in art will readily appreciate that many vendors supply various commercially available Aramid® fibers suitable for use in the friction materials. In the preferred embodiment of the present invention, one such exemplary Aramid® fiber is a Kevlar® Fiber, which is commercially available from DuPont, 5401 Jefferson Davis Hwy, Richmond, VA 23234 among others.

The titanium dioxide particles in the filler of the friction material provide an abrasive characteristic to the filler. As noted above, extreme abrasiveness can lead to excessive wear of brake components, but too little abrasiveness can lead to insufficient development of friction. In the preferred embodiment, the content, type, and size of titanium dioxide particles provide a mild abrasive function and, thus, have been found to provide a suitable amount of abrasiveness to obtain the desired frictional coefficient to achieve requisite braking power. The mild abrasive characteristics further provide a desirable braking feeling that is telegraphed to the driver of the vehicle during braking situations. Too much or too little abrasive content in the frictional material can diminish the telegraphing of braking feeling to the driver. Further, judder and other undesirable forms of vibration that are well known by one of ordinary skill in the art can be experienced by, among other things, a mismatch of abrasive content in the frictional material.

The mild abrasive characteristic of the titanium dioxide particles further allow larger amounts of the filler material to be used in the friction material when compared to traditional fillers and other traditional friction material components. The addition of the titanium dioxide particles, in lieu of other filler material, produces a generally homogenous and unstratified friction material. Other exemplary fillers include anti-oxidants, asbestos, barium sulfate, calcium carbonate, cashew nut oil, cotton, fiber of mixed oxides, lime, potassium titanate, diene rubber, nitrile rubber, scrap rubber, sea coal, and zinc oxide. One skilled in the art will readily appreciate the wide ranging the availability of other filler materials. A more detailed list is disclosed in Compositions, Fucntions, and Testing of Friction Brake Materials and their Additives by Peter J. Blau (prepared by the Oak Ridge National Laboratory, Document Number ORNL/TM-2001.64), which is incorporated by reference in its entirety as if fully set forth herein. The ability to introduce larger amounts of the titanium dioxide particles into the filler saves material costs, as titanium dioxide particles are relatively less expensive than the more traditional filler materials, as disclosed above.

In the preferred embodiment, the titanium dioxide particles serve to reinforce the friction material. One such way is due to the chosen average diameter ranges disclosed above. The smaller average diameter particles are more easily and tightly packed providing a more dense, reinforced, and robust friction material. A more tightly packed and more robust friction material will tend to exhibit better wear characteristics. Along with ability to use larger amounts of titanium oxide particles and the fact the particles are less expensive relative to traditional filler material, the wear characteristics need only be equal to previous formulations to realize the benefits of the formulation disclosed. To that end, minimal improvements in wear characteristics provide marked benefits to the customer, especially when less expensive but equal or superior raw materials are used.

In the preferred embodiment of the present invention, the introduction of the titanium particles mentioned above in no way alters the applicability of the friction material. While the percent of total volume or size of other components of the friction material may need to be adjusted to compensate for the specific needs of certain applications, the titanium dioxide particles provide benefits across many friction material applications. One skilled in art will readily appreciate that components in a friction material can be adjusted to tailor the friction material to the wide range of applications. Further, the ability to dissipate heat is not hindered with the introduction of the titanium dioxide, as the additional component of the filler provides equal or better heat dissipation characteristics when compared to other filler components discussed above.

In the preferred embodiment of the present invention, the reinforcement is a fibrous reinforcement, namely fibrous potassium titanate. The composition, use, and production of potassium titanate is disclosed in commonly assigned pending United States Patent Application number 09/735,625, which is hereby incorporated by reference in its entirety as if fully set forth herein. In an alternative preferred embodiment, the reinforcement is a powdery or flakey potassium titanate. The composition of the flakey or powdery potassium titanate is disclosed in commonly assigned pending United States Patent Application number 09/739,291, which is hereby incorporated by reference in its entirety as if fully set forth herein.

In the preferred embodiment of the present invention, the binder is a phenolic resin. The titanium dioxide is subjected to a surface treatment with a phenolic resin. The substances subjected to such a surface treatment have an advantage that they can be easily mixed with other materials when a friction material is manufactured. The mixture by volume of the phenolic resin is preferably in a range of five percent by volume (5 v %) to twenty five percent by volume (25 v %) with respect to the titanium dioxide particles.

In alternative embodiment, a silane coupling agent can be used in lieu of the phenolic resin. Further detail as to use and substitution of the phenolic resin, the silane coupling agent or other binders, is more fully discussed in commonly assigned pending United States Patent Application number 09/735,625 already incorporated by reference in its entirety.

The foregoing description of the invention is merely exemplary in nature and, thus, variations that do not depart from the gist of the invention are intended to be within the scope of the invention. Such variations are not to be regarded as a departure from the spirit and scope of the invention.

## Claims

1. A friction material comprising:
a filler comprising titanium dioxide particles, wherein an average diameter of said particles is less than about fifteen micrometers.

2. A friction material according to claim 1, wherein an amount of said titanium dioxide particles in said friction material ranges between about 2 v % to about 20 v %.

3. A friction material according to claim 1 or 2, wherein an amount of said titanium dioxide particles in said friction material ranges between about 5 v % to about 15 v %.

4. A friction material according to any of the preceding claims, wherein said diameter of said titanium dioxide particles ranges between about 0.15 micrometers to about 1 micrometer.

5. A friction material according to any of the preceding claims, wherein said average diameter of said titanium dioxide particles is about 0.28 micrometers.

6. A friction material according to any of the preceding claims, wherein said titanium dioxide particles are pigment grade.

7. A friction material according to any of the preceding claims, further comprising a reinforcement wherein said reinforcement is a potassium titanate, said potassium titanate being of a fiber form, a powder from, a flake form, or combination thereof.

8. A friction material according to any of the preceding claims, wherein said titanium dioxide particles are subject to a surface treatment with at least one of a silane coupling agent and a phenolic resin.

9. A braking element comprising a friction material according to any of claims 1 to 8.

10. A clutch comprising a friction material according to any of claims 1 to 8.
